# EUROPEAN PATENT SPECIFICATION

(11) **EP 3 295 013 B1**
(45) Date of publication and mention of the grant of the patent: **20.12.2023**
(21) Application number: 16722851.9
(22) Date of filing: 06.05.2016
(51) Int. Cl.: F02M 21/02, F16K 27/02, F16K 31/06, F16K 39/02

(54) **ELECTROMAGNETIC VALVE WITH MAGNETICALLY ACTUATED MAIN AND PILOT VALVE ELEMENTS**
MAGNETVENTIL MIT MAGNETISCH ANGETRIEBENEN VORSTEUERVENTIL UND HAUPTVENTIL
VANNE ELECTROMAGNETIQUE AVEC VANNE PRINCIPALE ET VANNE PILOTE ACTIONNÉES MAGNÉTIQUEMENT

(30) Priority: 13.05.2015 LU 92718
(43) Date of publication of application: 21.03.2018
(73) Proprietor: ROTAREX S.A., 7440 Lintgen (LU)
(72) Inventor: SELLEN, Stephan, 66693 Wehingen (DE); SCHMITZ, Philippe, 7340 Heisdorf (LU)
(74) Representative: Lecomte & Partners
(86) International application number: PCT/EP2016/060235
(87) International publication number: WO 2016/180737

(56) References cited:
- EP-A1- 2 573 438
- EP-A2- 2 653 763
- WO-A1-2015/031633
- US-A- 5 735 582
- US-A1- 2014 145 101

## Description

### Technical field

The invention is directed to an electromagnetic valve for fluid, more particularly for pressurized gas. More particularly, the invention is directed to a pilot operated electromagnetic valve for high pressure gases, e.g. compressed natural gas (CNG) and compressed hydrogen gas at pressures of up to 70 MPa.

### Background art

Prior art patent document published US 2013/0277587 A1 discloses a pilot operated electromagnetic valve for a pressurized fuel tank of a vehicle. The fuel can be compressed natural gas, biogas or hydrogen. Such gases can be stored in a compressed form in pressure cylinders at nominal pressures of up to 700 bar. A first embodiment of the valve of this teaching (in figure 2 of that document) comprises a seat formed in passage in a body with a gas inlet and a gas outlet. The valve comprises also a main valve element cooperating with the seat for, selectively, shutting-off and opening the passage. This main valve element is slidingly received in a cylindrical cavity of a magnetic armature. It comprises an internal bore receiving a pilot valve element configured for opening a pilot passage in the front portion that cooperates with the seat. This pilot valve member is made of magnetic material so as to form a core. It forms also an air-gap with a counter-core that is free to slide in the cylindrical cavity and to abut against the main valve element. Upon energization of a solenoid disposed around the armature, the magnetic field thereby generated goes through the core, the air-gap and the counter-core. Attractive forces between the core and the counter-core are then generated so that these get close to each other so as to bring the air-gap to zero. Since the counter-core abuts against arms of the main valve element that extend along the pilot valve element, this latter, being attracted towards the counter-core, leaves its position of contact with the main valve element that shuts-off the pilot passage. This latter becomes then open and the gas under potentially high pressure at the inlet can flow at a reduced flow towards the outlet. This flow generates a pressure differential between the portion of the front surface of the main valve element that is outside of the seat and the inner surface of said main valve element. This pressure difference results in a force that causes an opening movement of the main and pilot valve elements, thereby opening the passage. This means that special constraints with regard to the design of the main valve element are to be observed for achieving this pressure differential. These constraints can be limiting and expensive. In addition, the opening of the main valve element by the pressure of the gas is dependent of the pressure in the tank. This can also provide limitations in the function of the valve. Also, with reference to figure 2 of this document it is not clear how the counter-core position is ensured. This teaching discloses also (in figure 6 of that document) another embodiment of the valve where the counter-core is mechanically engaged, with play, with the main valve element. It is however not clear how this mechanical engagement is supposed to assist the opening movement of the main valve element.

### Summary of invention

### Technical Problem

The invention has for technical problem to provide a pilot valve for fluids, more particularly for high pressure fluids, like fuel gases, that is more reliable and cheaper.

### Technical solution

The invention is directed to an electromagnetic valve for a fluid like pressurized gas, comprising: a body with an inlet, an outlet, a main passage communicating said inlet with said outlet, and a seat in said passage; an armature with a bore and a bore bottom, said bore housing: a main valve member cooperating with the seat and comprising a pilot passage for the fluid; a pilot valve member configured for opening the pilot passage in the main valve member; a core linked to the pilot valve member and a counter-core cooperating with the main valve member, said core and counter-core forming a first air-gap; the valve further comprising a solenoid around the armature and configured for producing a magnetic field in the first air-gap that moves the core towards the counter-core and opens the pilot passage; wherein the counter-core forms with the bottom of the armature a second air-gap where, in the presence of the magnetic field and after movement of the core towards the counter-core, said counter-core is magnetically attracted towards said bottom so as to move the main valve member and open the main passage.

According to a preferred embodiment, the first air-gap has a stroke comprised between 0.3 mm and 0.7 mm and/or the second air-gap has a stroke comprised between 1 mm and 2 mm.

According to a preferred embodiment, the first air-gap is smaller than the second air-gap.

The core and the counter-core are advantageously made of ferromagnetic material.

The armature is advantageously made of ferromagnetic material.

The main valve element is advantageously made of non- or at least poor-ferromagnetic material.

Advantageously, the fluid at the inlet can flow into the bore of the armature and contact the core, the counter-core, the main valve element and the pilot valve element.

According to a preferred embodiment, the main valve element comprises a front face cooperating with the seat and a back face forming a pilot seat extending from said back face.

According to a preferred embodiment, the pilot valve member comprises a seal element fluid-tightly cooperating with the pilot seat, and a carrier carrying said element.

According to a preferred embodiment, the carrier comprises a bore with a shoulder, the seal element being housed in said bore against said shoulder, the carrier bore being essentially aligned with the armature bore, and said shoulder being in front of the back face of the main valve element.

According to a preferred embodiment, the valve further comprises a compression spring that abuts against the seal element and the bottom of the armature.

According to a preferred embodiment, the armature comprises a wall around the bore of the armature that comprises an intermediate ring portion made of non-magnetic material around the counter-core so as to force the magnetic field inside the bore of the armature through the core and the counter-core.

According to a preferred embodiment, in the closed state of said valve, the counter-core does not extend axially beyond the intermediate ring portion towards the bottom of the armature of more than 50%, preferably 30%, more preferably 20%, of a mean thickness of the wall around the bore.

According to a preferred embodiment, the counter-core does not extend axially beyond the intermediate ring portion towards the core, irrespective of the opened or closed state of the valve.

According to a preferred embodiment, the main valve member comprises a ring portion in which the counter-core is press fitted, said ring portion preferably being in contact with the bore.

According to a preferred embodiment, the counter-bore comprises a shoulder that abuts the ring portion of the main valve member.

According to a preferred embodiment, the main valve member comprises a front portion that cooperates with the seat and that is in contact with the bore of the armature, and arms extending from said front portion towards the ring portion, the core and pilot valve member being located between said front portion and said ring portion.

According to a preferred embodiment, the main valve member is screwed to the counter-core.

According to a preferred embodiment, the main valve member comprises a bore housing the pilot valve member.

According to a preferred embodiment, the core contacts the bore of the armature and comprises a bore housing the main valve element.

According to a preferred embodiment, the core is attached to the pilot valve member by means of at least one pin extending diametrically with regard to the longitudinal axis of the bore of the armature.

According to a preferred embodiment, the main valve element comprises oblong holes through which the at least one pin extends.

According to a preferred embodiment, the valve further comprises a carrier, which is preferably tubular shaped, which carries the pilot valve element and which is attached to the at least one pin.

According to a preferred embodiment, the core is generally cylindrically shaped with a front face towards the seat and a back face forming the first air gap with the counter-core, the front face preferably comprising a profile that extends in the direction of the seat at its outer portion. This profile is advantageously curved so as to guide and deviate a counter-flow, this deviate transmitting an effort to the core.

### Advantages of the invention

The invention is particularly interesting in that it provides an electromagnetic pilot valve with two air-gaps that are successively reduced for opening the valve upon energization of the solenoid. An advantage is that the core and the counter-core form a unique magnetic core after the first air-gap is closed, which leads to higher magnetic flux and forces to open the main valve member. The valve of the invention provides a simple, compact and cheap construction.

### Brief description of the drawings

Figure 1 is a sectional view of a valve according to a first embodiment of the invention, the valve being in a shut-off state.
Figure 2 is a perspective view of the main valve element and the counter-core of the valve of figure 1.
Figure 3 corresponds to figure 1 where the pilot valve is in the open position.
Figure 4 corresponds to figure 3 where the main valve is in the open position.
Figure 5 is a sectional view of a valve according to a second embodiment of the invention, the valve being in a shut-off state.
Figure 6 corresponds to figure 5 where the pilot valve is in the open position.
Figure 7 corresponds to figure 6 where the main valve is in the open position.

### Description of an embodiment

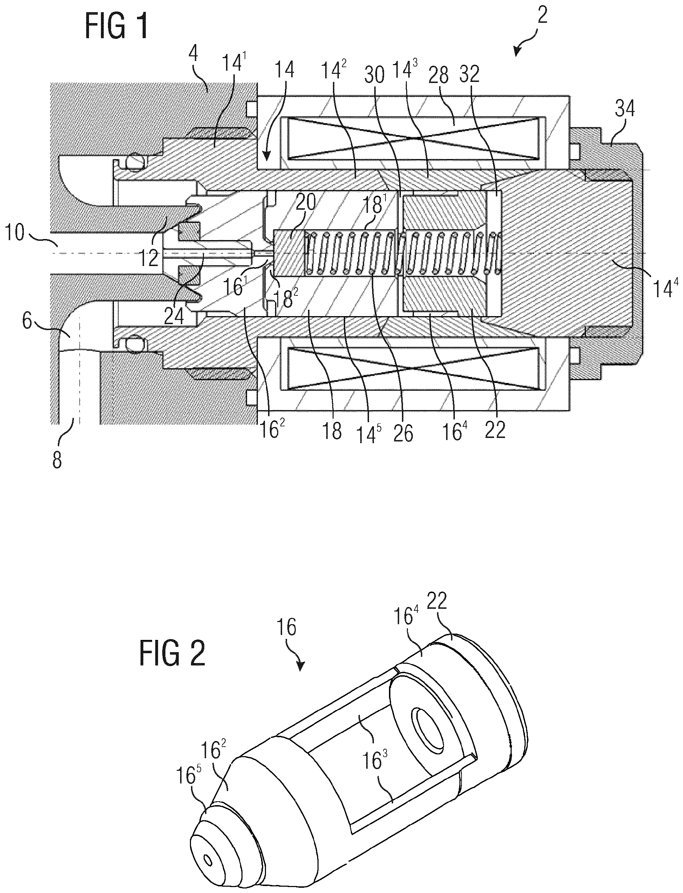

Figure 1 is a sectional view of the relevant portion of an electromagnetic valve 2 according to a first embodiment of the invention.

The valve 2 comprises a body 4 preferably made of metal like steel, stainless steel, brass or any other suitable material. Only a portion of the body 4 is represented, being understood that the body can comprise other functions. The body 4 comprises a passage 6 connecting an inlet 8 with an outlet 10. The passage 6 comprises a seat 12 that can be integrally formed with the body 4. The valve comprises also an armature made essentially of ferromagnetic material, like soft iron. The armature 14 can comprise a head or front portion 14¹ that is mounted on the body 4, for example by screwing. It comprises essentially a cylindrical wall 14² extending axially from the front portion 14¹. It comprises also a ring portion 14³ of non-ferromagnetic material or at least with poor ferromagnetic properties. This portion can be made for example of brass alloy or stainless steel. It can be welded to the cylindrical portion 14² so as to be integral with that portion. The armature 14 comprises also a bottom portion 14⁴ made of ferromagnetic material, ideally the same material as the other ferromagnetic portions 14¹ and 14². As is visible in figure 1, the contact surfaces between these portions 14², 14³ and 14⁴ can be inclined with regard to the longitudinal axis of the armature, thereby permitting an adequate guiding of the magnetic flux. The armature 14 forms a bore 14⁵ that receives a main valve element 16 that cooperates with the seat 12. The bore 14⁵ slidingly receives also a core 18 and a counter-core 22. This latter is rigidly attached to the main valve element 16 by means of arms that extend from the front portion 16² to a ring 16⁴ in which the counter-core 22 can be press fitted. The arms are not visible in the sectional view of figure 1 but are well visible in figure 2 illustrating the main valve element 16 and the counter-core 22.

The front portion 16² of the main valve element 16 comprises a pilot passage 24 for the fluid. This passage provides a communication between the outlet 10 and the inlet 8 provided that the pilot valve element 20 is distant from the pilot seat 16¹ on the front portion 16² of the main valve element 16. This front portion 16² comprises indeed a front face fluid-tightly cooperating with the seat 12, for instance by means of a seal 16⁵, and a rear face, opposed to the front face, and comprising the pilot seat 16¹ that surrounds the pilot passage 24 and forms a circular rib extending from that rear face.

The pilot valve element 20 is in the presence case a seat element made of a material that is able to cooperate in a fluid-tight manner with the pilot seat 16¹. It can be metallic or non-metallic, in any case preferably made of a material that is softer than the material forming the pilot seat 16¹. The element 20 is housed in a bore 18¹ of the core 18 and abuts a shoulder 18² on the end of the bore 18¹ that is in front of the rear face of the front portion 16² of the main valve element 16. A compression spring 26 extends longitudinally through the bore 18¹ of the core 18 and through the counter-core 22. The spring 26 exerts a resilient effort on the pilot valve element 20 towards the pilot seat 16¹.

The valve 2 comprises also a solenoid or coil 28 arranged around the armature 14. For instance, the solenoid 28 is slid axially over the external surface of the armature 14 and is retained in position by a cap 34 fastened to the bottom 14⁴ of the armature 14. For instance, the cap is secured to the bottom 14⁴ by a threaded engagement.

In the closed position of the valve as illustrated in figure 1, a first air-gap 30 is present between the core 18 and the counter-core 22, and a second air-gap 32 is present between the counter-core 22 and the bottom 14⁴ of the armature 14. The first air-gap 30 is smaller than the second one 32. The spring 26 presses the pilot valve element 20 against the pilot seat 16¹, thereby shutting-off the pilot passage 24. Also the main valve element 16 is pressed against the seat 12, thereby shutting-off the passage 6. The fluid pressure present at the inlet exerts a closing force on the pilot valve element 20 and the main valve element 16.

When the solenoid 28 is energized, it produces magnetic field in the wall 14² and in the bottom 14⁴ of the armature 14. The non-ferromagnetic or poor ferromagnetic ring portion 14³ of the armature forces the magnetic field towards the core 18 and counter-core 22. The magnetic field that is present in the core 18, the counter-core 22 and in the first air gap produces attractive force between the core and the counter-core. The counter-core 22 is rigidly attached to the main valve element 16, the attractive force moves therefore the core 18 and the pilot valve element 20 towards the counter-core 22, preferably until the core 18 contacts the counter-core 22.

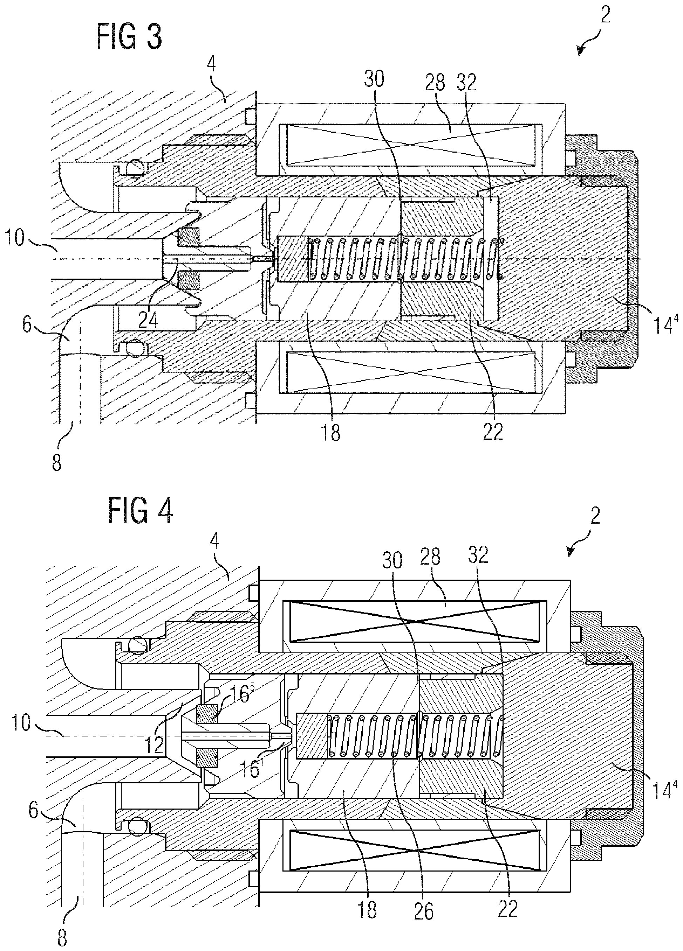

Figure 3 illustrates the valve in this first opening stage when the solenoid 28 is energized. The pilot passage 24 is then opened and the fluid can flow at a limited flow rate from the inlet to the outlet via the pilot passage 24. We can observe the initial first air gap 30 present in figure 1 is now reduced to zero or at least nearly zero. The close contact between core 18 and counter-core 22 leads to an increased magnetic flux trough the parts 14², 18, 22 and 14⁴ by means of increased magnetic forces to open the main valve member. It therefore produces attractive forces between the counter-core 22 and the bottom 14⁴.

Figure 4 illustrates the valve of figures 1 and 2 in the second opening stage when the solenoid 28 is energized, this second stage corresponding to a fully opened stage. Indeed, the above mentioned attractive forces between the counter-core 22 and the bottom 14⁴ of the armature move the counter-core 22 and thereby also the main valve element 16 towards the bottom 14⁴ until the counter-core 22 comes into contact with said bottom so as to reduce the initial second air gap 32 to zero or at least close to zero.

In the stage of figure 4, both initial air gaps 30 and 32 are reduced to zero or at least close to zero, thereby providing an increased magnetic flux through the assembly of the core 18, the counter-core 22 and the bottom 14⁴. The magnetic field is then maximum and the attractive forces between the core 18 and the counter-core 22 and also between the counter-core 22 and the bottom 14⁴ are also maximum, thereby providing a stable opened position.

As visible in figure 4, the front face of the front portion 16¹ of the main valve element 16 is now distant from the seat 12 and opens the passage 6.

When the solenoid 28 is not energized anymore, the attractive forces between the core 18 and the counter-core 22 and also between the counter-core 22 and the bottom 14⁴ disappear. The spring 26 urging the pilot valve element 20 moves first the element 20 against the pilot seat 16¹ and second the main valve element 16 against the seat 12, thereby totally closing the passage 6.

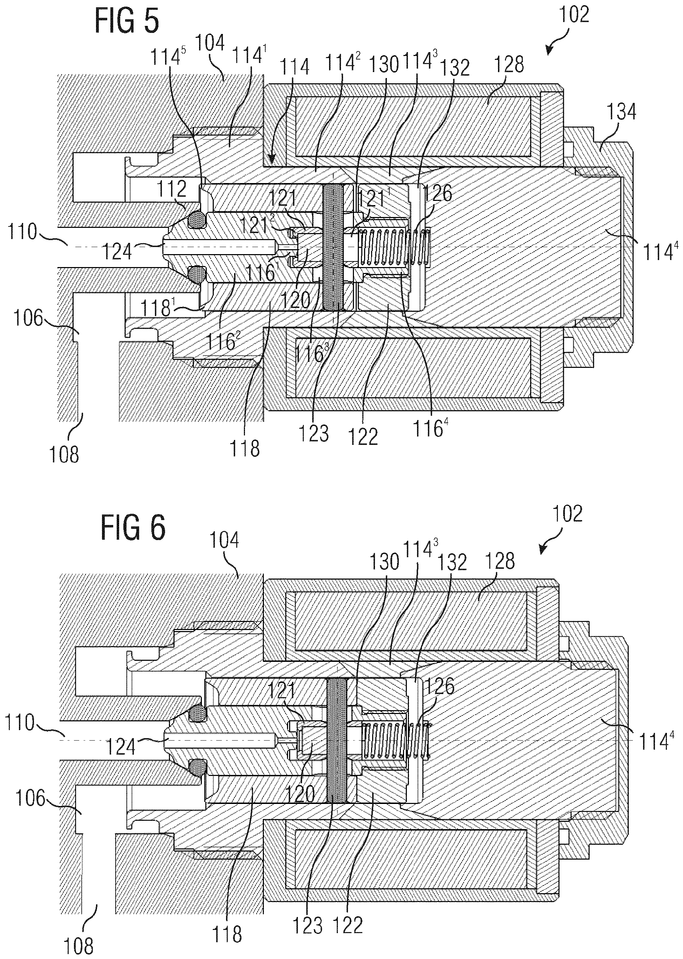

Figures 5 to 7 illustrate an electromagnetic valve according to a second embodiment of the invention. In these figures the reference numbers used for the first embodiment are used for the same elements or for corresponding elements, these numbers being however increased by 100 to differentiate both embodiments. Reference is thereby made to the description of the first embodiment. Specific reference numbers, comprised between 100 and 200 are used for specific elements.

Figure 5 illustrates the valve 102 of the second embodiment in a closed state, similarly to figure 1. The valve 102 differs from the valve 2 of the first embodiment essentially in the construction of the main valve element 116, its attachment to the counter-core 122 and the construction of the pilot valve element 120.

Indeed, the main valve element 116 does not contact the bore 114⁵ of the armature 114 but is rather housed in the core 118. This latter comprises indeed a through-bore slidingly receiving the main valve element 116. This latter comprises a rear portion 116⁴ that extends out of the core 118 and engages with the counter-core 122. For instance, this engagement is a threaded engagement, being understood that other types of engagement are possible. The main valve element comprises also a bore slidingly receiving the pilot valve element 120, more particularly slidingly receiving a carrier 121 with a bore 121¹ housing the pilot valve element 120. This carrier is generally tubular with a shoulder 121² at its end in vis-à-vis of the pilot seat 116¹ formed around the pilot passage 124 and extending from the rear face of the front portion 116² of the main valve element 116. The carrier 121 is attached to the core 118 by means of a pin 123 that extends radially with regard to the longitudinal axis of the armature 114 and its bore 114⁵. To that end, the main valve element 116 comprises oblong holes 116³ that permit movement of the pin 123 and thereby of the pilot valve element 120 relative to said main valve element 116. The pin 123 fixes the pilot valve element 120 in the carrier 121.

The functioning of the valve 102 is a follows. With reference to figure 5, in the absence of energization of the solenoid 128, the compressive spring 126 urges the pilot valve element 120 against the pilot seat 116¹, thereby shutting-off the pilot passage 124, and also urges the main valve element 116 against the seat 112, thereby totally shutting-off the passage 106. The pressure of the fluid at the inlet 108 that is substantially higher than at the outlet 110 urges also both the pilot valve element 120 and the main valve element 116 towards their respective seats 116¹ and 124.

Still with reference to figure 5, in the shut-off state without energization of the solenoid, a first air-gap 130 is present between the core 118 and the counter-core 122, and a second air-gap 132 is present between the counter-core 122 and the bottom 114⁴. Similarly to the first embodiment, the first air-gap 130 is smaller than the second one 132.

With reference to figure 6, when the solenoid 128 is energized, the magnetic field generated by the solenoid is deviated towards the core 118 and the counter-core 122 due to the non- or poor-ferromagnetic ring portion 114³ of the armature 114. This field generates attractive forces in the air-gap 130 between the core 118 and the counter-core 122. In the present case, high attractive forces are only present at the annular face of the core 118 facing the counter-core 122. These forces move the core 118 towards the counter-core 122. This moves the pilot valve element 120 away from the pilot seat 116¹ by means of the attachment pin 123 and the carrier 121 holding said element 120. The fluid under pressure at the inlet 108 can then flow at a reduced flow rate towards the outlet 110 through the pilot passage 124. This limited flow can create a counter-pressure at the outlet which reduces the effort necessary for moving the main valve element 116.

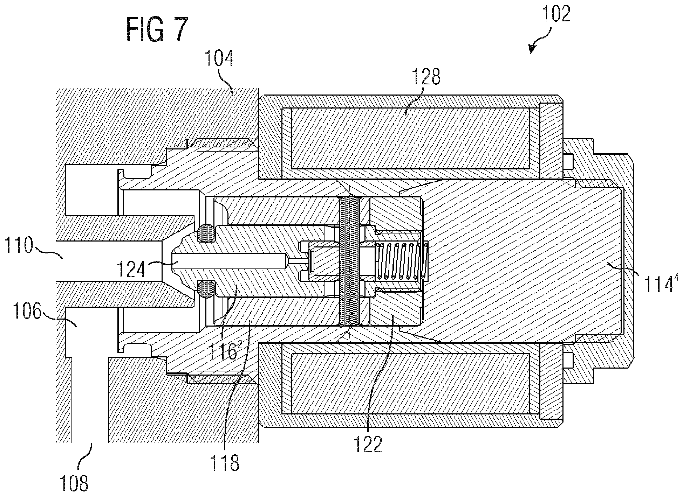

With reference to figure 7, when the solenoid 128 is still energized, further to the reduction of the first air-gap 130 to zero or nearly zero, the magnetic field in the counter-core 122, the second air-gap 132 and the bottom 114⁴ is increased due to the lower magnetic resistance. Attractive forces in the second air-gap 132 are increased and the counter-core 122 and thereby also the main valve element 116 are moved towards the bottom 114⁴. The valve 102 is then fully opened.

When the solenoid 128 is not energized anymore, the attractive forces between the core 118 and the counter-core 122 and also between the counter-core 122 and the bottom 114⁴ disappears. The spring 126 urges first the pilot valve element 120 against the pilot seat 116¹ and second the main valve element 116 against the seat 112, thereby totally closing the passage 106.

With reference back to figure 5, the cylindrically shaped core 118 can comprise a profiled front face 118¹ with an increasing height towards its external contour. The purpose of this profiled front face 118¹ is to facilitate the refilling of a tank on which the valve 102 would be mounted. Indeed, refilling means generating a counter-flow from the outlet 110 towards the inlet 108. Such an operation is in principle possible by applying a pressure at the outlet 110 that, when acting on the surface of the main valve element 116 in the outlet, counteracts the urging force of the spring 126 so as to move the main valve element 116 away from the seat 112. As soon as this happens, a refill flow through the passage 106 is generated. This can cause a pressure drop on the front face of the main valve element 116. In order to keep the valve sufficiently opened during refilling, the profiled front face 118¹ of the core 118 has for effect that the refill flow exerts a dynamic effort on said core 118 which participates in counteracting the closing force of the spring 126.

## Claims

1. Electromagnetic valve (2; 102) for a fluid like pressurized gas, comprising:
- a body (4; 104) with an inlet (8; 108), an outlet (10; 110), a main passage (6; 106) communicating said inlet (8; 108) with said outlet (10; 110), and a seat (12; 112) in said passage (6; 106);
- an armature (14; 114) with a bore (14⁵; 114⁵) and a bore bottom (14⁴; 114⁴), said bore (14⁵; 114⁵) housing:
∘ a main valve member (16; 116) cooperating with the seat (12; 112) and comprising a pilot passage (24; 124) for the fluid;
∘ a pilot valve member (20; 120) configured for opening the pilot passage (24; 124) in the main valve member (16; 116);
∘ a core (18; 118) linked to the pilot valve member (20; 120) and a counter-core (22; 122) cooperating with the main valve member (16; 116), said core (18, 118) and counter-core (22; 122) forming a first air-gap (30);
- a solenoid (28; 128) around the armature (14; 114) and configured for producing a magnetic field in the first air-gap (30; 130) that moves the core (18; 118) towards the counter-core (22; 122) and opens the pilot passage (24; 124);
wherein the counter-core (22; 122) forms with the bottom (14⁴; 114⁴) of the armature (14; 114) a second air-gap (32; 132);
**characterized in that**
in the presence of the magnetic field and after movement of the core (18; 118) towards the counter-core (22; 122), said counter-core (22; 122) is magnetically attracted towards said bottom (14⁴; 114⁴) so as to move the main valve member (16; 116) and open the main passage (6; 106).

2. Electromagnetic valve (2; 102) according to claim 1, wherein the first air-gap (30; 130) has a stroke comprised between 0.3 and 0.7 mm and/or the second air-gap (32; 132) has a stroke comprised between 1 and 2 mm.

3. Electromagnetic valve (2; 102) according to one of claims 1 and 2, wherein the main valve element (16; 116) comprises a front face cooperating with the seat (12; 112) and a back face forming a pilot seat (16¹; 116¹) extending from said back face, and preferably wherein the pilot valve member comprises a seal element (20; 120) fluid-tightly cooperating with the pilot seat (16¹; 116¹), and a carrier (18; 121) carrying said element.

4. Electromagnetic valve (2; 102) according to claim 3, wherein the carrier (18; 121) comprises a bore (18¹; 120¹) with a shoulder (18²; 120²), the seal element (20; 120) being housed in said bore against said shoulder, the carrier bore (18¹; 120¹) being essentially aligned with the armature bore (14⁵; 114⁵), and said shoulder (18²; 120²) being in in front of the back face of the main valve element (16; 116).

5. Electromagnetic valve (2; 102) according to one of claims 3 and 4, further comprising a compression spring (26; 126) that abuts against the seal element (20; 120) and the bottom (14⁴; 114⁴) of the armature (14; 114).

6. Electromagnetic (2; 102) valve according to any one of claims 1 to 5, wherein the armature (14; 114) comprises a wall (14², 14³; 114², 114³) around the bore (14⁵; 114⁵) of the armature (14; 114) that comprises an intermediate ring portion (14³; 114³) made of non-magnetic material around the counter-core (22; 122) so as to force the magnetic field inside the bore (14⁵; 114⁵) of the armature (14; 114) through the core (18; 118) and the counter-core (22, 122), and preferably wherein in the closed state of said valve, the counter-core (22; 122) does not extend axially beyond the intermediate ring portion (14³; 114³) towards the bottom (14⁴; 114⁴) of the armature (14; 114) of more than 50%, preferably 30%, more preferably 20%, of a mean thickness of the wall around the bore.

7. Electromagnetic valve (2; 102) according to claim 6, wherein the counter-core (22; 122) does not extend axially beyond the intermediate ring portion (14³; 114³) towards the core (18; 118).

8. Electromagnetic (2) valve according to any one of claims 1 to 7, wherein the main valve member (16) comprises a ring portion (16⁴) in which the counter-core (22) is press fitted, said ring portion (16⁴) preferably being in contact with the bore (14⁵) of the armature (14), and preferably wherein the counter-core (22) comprises a shoulder that abuts the ring portion (16⁴) of the main valve member (16).

9. Electromagnetic (2) valve according to claim 8, wherein the main valve member (16) comprises a front portion (16²) that cooperates with the seat (12) and that is in contact with the bore (14⁵) of the armature (14), and arms (16³) extending from said front portion (16²) towards the ring portion (16⁴), the core (18) and pilot valve member (20) being located between said front portion (16²) and said ring portion (16⁴).

10. Electromagnetic (102) valve according to any one of claims 1 to 7, wherein the main valve member (116) is screwed to the counter-core (122), and preferably wherein the main valve member (116) comprises a bore housing the pilot valve member (120).

11. Electromagnetic (102) valve according to claim 10, wherein the core (118) contacts the bore (14⁵) of the armature (14) and comprises a bore housing the main valve element (116).

12. Electromagnetic valve (102) according to claims 10 and 11, wherein the core (118) is attached to the pilot valve member (120) by means of at least one pin (123) extending diametrically with regard to the longitudinal axis of the bore (114⁵) of the armature (114).

13. Electromagnetic valve (102) according to claim 12, wherein the main valve element (116) comprises oblong holes (116³) through which the at least one pin (123) extends.

14. Electromagnetic valve (102) according to one of claims 12 and 13, further comprising a carrier (121), which is preferably tubular shaped, which carries the pilot valve element (120) and which is attached to the at least one pin (123).

15. Electromagnetic valve (102) according to any one of claims 12 to 14, wherein the core (118) is generally cylindrically shaped with a front face (118¹) towards the seat (112) and a back face forming the first air-gap (130) with the counter-core (122), the front face (118¹) preferably comprising a profile that extends in the direction of the seat (112) at its outer portion.

## Patentansprüche

1. Ansprüche
Elektromagnetisches Ventil (2; 102) für ein Fluid, wie Druckgas, das folgendes umfasst:
- einen Körper (4; 104) mit einem Einlass (8; 108), einem Auslass (10; 110), einem Hauptdurchgang (6; 106), der den Einlass (8; 108) mit dem Auslass (10; 110) verbindet, und einen Sitz (12; 112) in dem Durchgang (6; 106);
- einen Anker (14; 114) mit einer Bohrung (14⁵, 114⁵) und einem Bohrungsboden (14⁴; 114⁴), wobei die Bohrung (145; 1145) folgendes enthält:
∘ ein Hauptventilelement (16; 116), das mit dem Sitz (12; 112) zusammenwirkt und einen Vorsteuerdurchgang (24; 124) für das Fluid aufweist;
∘ ein Vorsteuerventilglied (20; 120) zum Öffnen des Vorsteuerdurchgangs (24; 124) im Hauptventilelement (16; 116);
∘ einen Kern (18; 118), der mit dem Vorsteuerventilglied (20; 120) verbunden ist, und einen Gegenkern (22; 122), der mit dem Hauptventilelement (16; 116) zusammenwirt, wobei der Kern (18; 118) und der Gegenkern (22; 122) einen ersten Luftspalt (30) bilden;
- ein Solenoid (28; 128), das den Anker (14; 114) umgibt und so gestaltet ist, dass es im ersten Luftspalt (30; 130) ein Magnetfeld erzeugt, das den Kern (18; 118) zum Gegenkern (22; 122) hin bewegt und den Pilotkanal (24; 124) öffnet,
wobei der Gegenkern (22; 122) mit dem Boden (14⁴; 114⁴) des Ankers (14; 114) einen zweiten Luftspalt (32; 132) bildet;
**dadurch gekennzeichnet, dass**
bei Vorhandensein des Magnetfeldes und nach einer Bewegung des Kerns (18; 118) in Richtung des Gegenkerns (22; 122) der Gegenkern (22; 122) magnetisch in Richtung des Bodens (14⁴; 114⁴) angezogen wird, um das Hauptventilelement (16; 116) zu bewegen und den Hauptkanal (6; 106) zu öffnen.

2. Elektromagnetisches Ventil (2; 102) nach Anspruch 1, wobei der erste Luftspalt (30; 130) einen Hub zwischen 0,3 und 0,7 mm hat und/oder der zweite Luftspalt (32; 132) einen Hub zwischen 1 und 2 mm hat.

3. Elektromagnetisches Ventil (2; 102) nach einem der Ansprüche 1 und 2, wobei das Hauptventilelement (16; 116) eine Vorderseite, die mit dem Sitz (12; 112) zusammenwirkt, und eine Rückseite aufweist, die einen Vorsteuersitz (16¹; 116¹) bildet, der sich von der Rückseite aus erstreckt, und wobei das Vorsteuerventilglied vorzugsweise ein Dichtungselement (20; 120), das fluiddicht mit dem Vorsteuersitz (16'; 116") zusammenwirkt, und einen Träger (18; 121) aufweist, der das Element trägt.

4. Elektromagnetisches Ventil (2; 102) nach Anspruch 3, wobei der Träger (18; 121) eine Bohrung (18¹; 120¹) mit einer Schulter (18²; 1202) aufweist, wobei das Dichtungselement (20; 120) in der Bohrung gegen die Schulter untergebracht ist, wobei die Trägerbohrung (18¹; 120¹) im Wesentlichen mit der Ankerbohrung (14⁵; 114⁵) ausgerichtet ist und die Schulter (18²; 120²) vor der Rückseite des Hauptventilelements (16; 116) liegt.

5. Elektromagnetisches Ventil (2; 102) nach einem der Ansprüche 3 und 4, ferner mit einer Druckfeder (26; 126), die an dem Dichtelement (20; 120) und dem Boden (14⁴; 114⁴) des Ankers (14; 114) anliegt.

6. Elektromagnetisches Ventil (2; 102) nach einem der Ansprüche 1 bis 5, wobei der Anker (14; 114) eine Wand (14², 14³; 114², 114³) um die Bohrung (14⁵; 114⁵) des Ankers (14; 114) herum aufweist, die einen Zwischenringabschnitt (14³; 114³) aus nichtmagnetischem Material um den Gegenkern (22; 122) herum aufweist, um das Magnetfeld innerhalb der Bohrung (14⁵; 114⁵) des Ankers (14; 114) durch den Kern (18; 122) zu drücken, und wobei sich der Gegenkern (22; 122) im geschlossenen Zustand des Ventils vorzugsweise nicht axial über den Zwischenringabschnitt (14³; 114³) hinaus in Richtung des Bodens (14⁴; 114⁴) des Ankers (14; 114) von mehr als 50 %, vorzugsweise 30 %, besonders bevorzugt 20 %, einer mittleren Dicke der Wand um die Bohrung herum erstreckt.

7. Elektromagnetisches Ventil (2; 102) nach Anspruch 6, wobei sich der Gegenkern (22; 122) nicht axial über den Zwischenringabschnitt (14³; 114³) hinaus in Richtung auf den Kern (18; 118) erstreckt.

8. Elektromagnetisches Ventil (2) nach einem der Ansprüche 1 bis 7, wobei das Hauptventilelement (16) einen Ringabschnitt (16⁴) aufweist, in den der Gegenkern (22) eingepresst ist, wobei der Ringabschnitt (16⁴) vorzugsweise in Kontakt mit der Bohrung (14⁵) des Ankers (14) steht, und wobei der Gegenkern (22) vorzugsweise eine Schulter aufweist, die an dem Ringabschnitt (16⁴) des Hauptventilelements (16) anliegt.

9. Elektromagnetisches Ventil (2) nach Anspruch 8, wobei das Hauptventilelement (16) einen vorderen Abschnitt (162), der mit dem Sitz (12) zusammenwirkt und mit der Bohrung (14⁵) des Ankers (14) in Kontakt steht, und Arme (16²) umfasst, die sich von dem vorderen Abschnitt (16²) in Richtung des Ringabschnitts (16⁴) erstrecken, wobei der Kern (18) und das Pilotventilelement (20) zwischen dem vorderen Abschnitt (16²) und dem Ringabschnitt (164) angeordnet sind.

10. Elektromagnetisches Ventil (102) nach einem der Ansprüche 1 bis 7, wobei das Hauptventilelement (116) mit dem Gegenkern (122) verschraubt ist, und wobei das Hauptventilelement (116) vorzugsweise eine Bohrung aufweist, in der das Pilotventilelement (120) untergebracht ist.

11. Elektromagnetisches Ventil (102) nach Anspruch 10, bei dem der Kern (118) die Bohrung (14⁵) des Ankers (14) berührt und eine Bohrung aufweist, die das Hauptventilelement (116) aufnimmt.

12. Elektromagnetisches Ventil (102) nach den Ansprüchen 10 und 11, wobei der Kern (118) mit dem Vorsteuerventilglied (120) mittels mindestens eines Stiftes (123) verbunden ist, der sich diametral zur Längsachse der Bohrung (114⁵) des Ankers (114) erstreckt.

13. Elektromagnetisches Ventil (102) nach Anspruch 12, wobei das Hauptventilelement (116) Langlöcher (116³) aufweist, durch die sich der mindestens eine Stift (123) erstreckt.

14. Elektromagnetisches Ventil (102) nach einem der Ansprüche 12 und 13, ferner mit einem vorzugsweise rohrförmigen Träger (121), der das Vorsteuerventilelement (120) trägt und an dem mindestens ein Stift (123) befestigt ist.

15. Elektromagnetisches Ventil (102) nach einem der Ansprüche 12 bis 14, wobei der Kern (118) allgemein zylindrisch geformt ist, mit einer dem Sitz (112) zugewandten Vorderseite (118) und einer den ersten Luftspalt (130) mit dem Gegenkern (122) bildenden Rückseite, wobei die Vorderseite (118¹) vorzugsweise ein Profil aufweist, das sich an seinem äußeren Abschnitt in Richtung des Sitzes (112) erstreckt.

## Revendications

1. Vanne électromagnétique (2; 102) pour un fluide tel qu'un gaz sous pression, comprenant:
- un corps (4; 104) avec une entrée (8; 108), une sortie (10; 110), un passage principal (6; 106) faisant communiquer ladite entrée (8; 108) avec ladite sortie (10; 110), et un siège (12; 112) dans ledit passage (6; 106);
- une armature (14; 114) avec un alésage (14⁵; 114⁵) et un fond de l'alésage (14⁴; 114⁴), ledit alésage (14⁵; 114⁵) logeant:
∘ un élément de vanne principal (16; 116) coopérant avec le siège (12; 112) et comprenant un passage pilote (24; 124) pour le fluide;
∘ un élément de vanne pilote (20; 120) configuré pour ouvrir le passage pilote (24; 124) dans l'élément de vanne principal (16; 116);
∘ un noyau (18; 118) relié à l'élément de vanne pilote (20; 120) et un contre-noyau (22; 122) coopérant avec l'élément de vanne principal (16; 116), ledit noyau (18, 118) et le contre-noyau (22; 122) formant un premier entrefer (30);
- un solénoïde (28; 128) autour de l'armature (14; 114) et configuré pour produire un champ magnétique dans le premier entrefer (30; 130) déplaçant le noyau (18; 118) en direction du contre-noyau (22 ; 122) et ouvrant le passage pilote (24; 124);
dans laquelle le contre-noyau (22; 122) forme avec le fond (14⁴; 114⁴) de l'armature (14; 114) un second entrefer (32; 132) ;
**caractérisé en ce que**
présence du champ magnétique et après déplacement du noyau (18; 118) en direction du contre-noyau (22; 122), ledit contre-noyau (22; 122) est magnétiquement attiré vers ledit fond (14⁴; 114⁴) de manière à déplacer l'élément de vanne principal (16; 116) et ouvrir le passage principal (6; 106).

2. Vanne électromagnétique (2; 102) selon la revendication 1, dans laquelle le premier entrefer (30; 130) a une course comprise entre 0,3 et 0,7 mm et/ou le deuxième entrefer (32; 132) a une course comprise entre 1 et 2 mm.

3. Vanne électromagnétique (2; 102) selon l'une quelconque des revendications 1 et 2, dans laquelle l'élément principal de vanne (16; 116) comprend une face frontale coopérant avec le siège (12; 112) et une face arrière formant un siège pilote (16¹; 116¹) s'étendant depuis ladite face arrière, et préférentiellement dans laquelle l'élément de vanne pilote comprend un élément d'étanchéité (20; 120) coopérant de manière étanche au fluide avec le siège pilote (16¹; 116¹), et un support (18; 121) portant ledit élément.

4. Vanne électromagnétique (2; 102) selon la revendication 3, dans laquelle le support (18; 121) comprend un alésage (18¹; 120¹) avec un épaulement (18²; 120²), l'élément d'étanchéité (20; 120) étant logé dans ledit alésage contre ledit épaulement, l'alésage du support (18¹; 120¹) étant essentiellement aligné avec l'alésage de l'armature (14⁵; 114⁵), et ledit épaulement (18²; 120²) étant en face de la face arrière de l'élément de vanne principal (16 ; 116).

5. Vanne électromagnétique (2; 102) selon l'une quelconque des revendications 3 et 4, comprenant en outre un ressort de compression (26; 126) qui vient en butée contre l'élément d'étanchéité (20; 120) et le fond (14⁴; 114⁴) de l'armature (14; 114).

6. Vanne selon l'une quelconque des revendications 1 à 5, dans laquelle l'armature (14; 114) comprend une paroi (14², 14³; 114², 114³) autour de l'alésage (14⁵; 114⁵) de l'armature (14; 114), qui comprend une partie intermédiaire annulaire (14³; 114³) en matériau non-magnétique autour du contre-noyau (22; 122) de manière à forcer le champ magnétique à l'intérieur de l'alésage (14⁵; 114⁵) de l'armature (14; 114) à travers le noyau (18; 118) et le contre-noyau (22, 122), et préférentiellement dans laquelle, à l'état fermé de ladite vanne, le contre-noyau (22; 122) ne se prolonge pas axialement au-delà de la portion intermédiaire annulaire (14³; 114³) vers le fond (14⁴; 114⁴) de l'armature (14; 114) sur plus de 50%, préférentiellement 30%, plus préférentiellement 20%, d'une épaisseur moyenne de la paroi autour de l'alésage.

7. Vanne électromagnétique (2; 102) selon la revendication 6, dans laquelle le contre-noyau (22; 122) ne se prolonge pas axialement au-delà de la portion intermédiaire annulaire (14³; 114³) en direction du noyau (18; 118).

8. Vanne électromagnétique (2) selon l'une quelconque des revendications 1 à 7, dans laquelle l'élément de vanne principal (16) comprend une partie annulaire (16⁴) dans laquelle le contre-noyau (22) est emmanché, ladite partie annulaire (16⁴) étant de préférence en contact avec l'alésage (14⁵) de l'armature (14), et préférentiellement dans laquelle le contre-noyau (22) comprend un épaulement qui vient en butée contre la partie annulaire (16⁴) de l'élément de vanne principal (16).

9. Vanne électromagnétique (2) selon la revendication 8, dans laquelle l'élément de vanne principal (16) comprend une partie avant (16²) qui coopère avec le siège (12) et qui est en contact avec l'alésage (14⁵) de l'armature (14), et des bras (16³) s'étendant depuis ladite partie avant (16²) en direction de la partie annulaire (16⁴), le noyau (18) et l'élément de vanne pilote (20) étant situés entre ladite partie avant (16²) et ladite partie annulaire (16⁴).

10. Valve électromagnétique (102) selon l'une quelconque des revendications 1 à 7, dans laquelle l'élément de vanne principal (116) est vissé au contre-noyau (122), et préférentiellement dans laquelle l'élément de vanne principal (116) comprend un alésage logeant l'élément de vanne pilote (120).

11. Valve électromagnétique (102) selon la revendication 10, dans laquelle le noyau (118) est en contact avec l'alésage (114⁵) de l'armature (114) et comprend un alésage logeant l'élément de vanne principal (116).

12. Vanne électromagnétique (102) selon les revendications 10 et 11, dans laquelle le noyau (118) est fixé à l'élément de vanne pilote (120) au moyen d'au moins une broche (123) s'étendant diamétralement par rapport à l'axe longitudinal de l'alésage (114⁵) de l'armature (114).

13. Vanne électromagnétique (102) selon la revendication 12, dans laquelle l'élément de vanne principal (116) comprend des trous oblongs (116³) au travers desquels la ou les broches (123) s'étendent.

14. Vanne électromagnétique (102) selon l'une quelconque des revendications 12 et 13, comprenant en outre un support (121), qui est de préférence de forme tubulaire, qui porte l'élément de vanne pilote (120) et qui est fixé à la ou les broches (123).

15. Vanne électromagnétique (102) selon l'une quelconque des revendications 12 à 14, dans laquelle le noyau (118) est généralement de forme cylindrique avec une face avant (118¹) vers le siège (112) et une face arrière formant le premier entrefer (130) avec le contre-noyau (122), la face avant (118¹) comprenant de préférence un profil qui se prolonge dans la direction du siège (112) à sa partie externe.
